(19) Europäisches Patentamt
European Patent Office
Office européen des brevets

(11) **EP 4 079 537 B1**

(12) **EUROPEAN PATENT SPECIFICATION**

(45) Date of publication and mention
of the grant of the patent:
**06.03.2024 Bulletin 2024/10**

(21) Application number: **22160957.1**

(22) Date of filing: **09.03.2022**

(51) International Patent Classification (IPC):
**B60C 1/00** *(2006.01)*     **B60C 11/03** *(2006.01)*
**B60C 11/04** *(2006.01)*     **B60C 11/12** *(2006.01)*
**B60C 11/13** *(2006.01)*

(52) Cooperative Patent Classification (CPC):
**B60C 1/0016; B60C 11/0306; B60C 11/033;**
**B60C 11/12; B60C 11/1272; B60C 11/13;**
**B60C 11/1392;** B60C 2011/0346; B60C 2011/0348;
B60C 2011/1209; B60C 2011/1213;
B60C 2011/129; B60C 2200/06; Y02T 10/86

(54) **HEAVY DUTY TIRE**

SCHWERLASTREIFEN

PNEU POIDS LOURD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.04.2021 JP 2021070485**

(43) Date of publication of application:
**26.10.2022 Bulletin 2022/43**

(73) Proprietor: **Sumitomo Rubber Industries, Ltd.
Kobe-shi, Hyogo-ken 651-0072 (JP)**

(72) Inventors:
• **OSHIMO, Masaki
Kobe-shi, Hyogo, 651-0072 (JP)**
• **TOYODA, Masataka
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
EP-A1- 1 961 785     EP-A1- 3 342 605
EP-A1- 3 795 378     JP-A- 2008 308 010
US-A1- 2014 251 519

EP 4 079 537 B1

**Description**

TECHNICAL FIELD

The present invention relates to a heavy duty tire.

BACKGROUND ART

From the standpoint of improving ice braking performance, it has been proposed for a heavy duty tire (e.g., a heavy duty studless winter tire) to use a rubber composition mainly containing natural rubber/polybutadiene rubber to soften the rubber surface at low temperatures and thereby improve the conformity of the rubber surface. However, this technique does not provide sufficient response on icy roads as less reaction force is generated when the road surface is smooth. Additionally, also tires with special rubber compositions are proposed for providing improved snow/dry traction, see for instance US 2014/0251519 A1.

SUMMARY OF INVENTION

TECHNICAL PROBLEM

The present invention aims to solve the above problem and provide a heavy duty tire having excellent response (handling stability) on ice.

SOLUTION TO PROBLEM

The present invention relates to a heavy duty tire, as defined in claim 1, including a tread,

the tread containing: one or more rubber components including a styrene-butadiene rubber; carbon black; and silica,
the tread having a plurality of sipes,
the tread satisfying the following relationship (1):

$$(1) \quad 100 \geq A \times B \geq 40$$

wherein A represents a styrene-butadiene rubber content (% by mass) based on 100% by mass of the rubber components, and B represents a ratio ($mm^{-1}$) of lateral direction components of the sipes to a surface area of the tread.

ADVANTAGEOUS EFFECTS OF INVENTION

The heavy duty tire of the present invention includes a tread containing one or more rubber components including a styrene-butadiene rubber, carbon black, and silica. The tread has a plurality of sipes and further satisfies relationship (1) with respect to the SBR content A (% by mass) and the ratio B ($mm^{-1}$) of the lateral direction components of the sipes to the surface area of the tread. Thus, the present invention provides a heavy duty tire having excellent response (handling stability) on ice.

BRIEF DESCRIPTION OF DRAWINGS

Fig. 1 is a pattern view of a tread portion of a tire according to an embodiment of the present invention.
Fig. 2 is an enlarged view of the middle land region of Fig. 1.
Fig. 3 is an enlarged view of the first middle block of Fig. 2.
Fig. 4 is an A-A cross-sectional view of Fig. 3.
Fig. 5 is an enlarged view of the crown land region of Fig. 1.
Fig. 6 is an enlarged view of the first crown block of Fig. 5.
Fig. 7 is an enlarged view of the shoulder land region of Fig. 1.
Fig. 8 is a B-B cross-sectional view of Fig. 7.

DESCRIPTION OF EMBODIMENTS

The present invention relates to a heavy duty tire including a tread containing one or more rubber components including a styrene-butadiene rubber (SBR), carbon black, and silica. The tread has a plurality of sipes and further satisfies relationship (1) with respect to the SBR content A (% by mass) and the ratio B ($mm^{-1}$) of the lateral direction components of the sipes to the surface area of the tread. The heavy duty tire has excellent response (handling stability) on ice.

The reason for this advantageous effect is not clear but is believed to be as follows.

In the heavy duty tire, SBR is contained in the rubber components to form hard styrene microdomains in the rubber layer. Thus, the rubber surface can exhibit a scratching effect on smooth road surfaces, while the styrene domains inside the rubber also facilitate transmission of force. Further, by incorporating silica, it is possible to reduce the tan $\delta$ at high temperatures while enhancing the tan $\delta$ at low temperatures. Then, it is considered that due to the high tan $\delta$ at low temperatures, the deformation caused by being caught by the styrene domains on the tread surface produces greater energy loss, resulting in more grip on the surface, while the difference ($\delta$) between input and response inside the rubber is reduced, thereby facilitating transmission of force. Moreover, carbon black reinforces the SBR phase to permit greater force to occur within the SBR phase. It is also considered that increasing the ratio of the lateral direction components of the sipes facilitates deformation of the entire rubber, and at the same time adjusting the product of the ratio of the lateral direction components of the sipes and the SBR content to 40 or higher facilitates catching on the sipes and the styrene phase on the tread surface and allows the entire rubber of the tread portion to undergo deformation, thereby improving response. Thus, it is believed that a larger deformation occurs on the tread surface, resulting in more grip on the surface, while the inner portion not contacting the ground also greatly deforms to generate more reaction force, and therefore that the entire tread can instantly transmit great reaction force even on icy roads, and the response on ice can be improved.

Thus, the invention solves the problem (purpose) of improving response on ice by formulating a heavy duty tire including a tread containing one or more rubber components including a styrene butadiene rubber (SBR), carbon black, and silica so that the tread has a plurality of sipes and further satisfies the relationship (1): $100 \geq A \times B \geq 40$. In other words, the parameter of "$100 \geq A \times B \geq 40$" does not define the problem (purpose), and the problem herein is to improve response on ice. In order to provide a solution to this problem, the heavy duty tire has been formulated to satisfy the parameter.

An embodiment of the present invention will be described below with reference to drawings, but the invention is not limited to the embodiment.

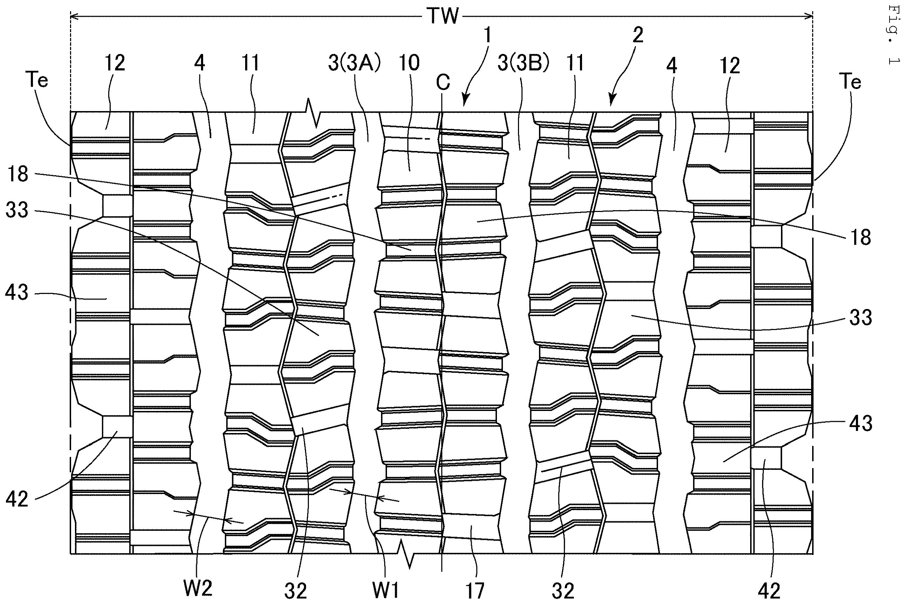

Fig. 1 is a pattern view (ground contact surface) of a tread portion 2 of a tire 1 according to an embodiment of the present invention. The tire 1 is applicable to various tires such as heavy duty pneumatic tires and non-pneumatic tires filled inside with no pressurized air. The tire 1 is preferably a heavy duty tire with a normal load of 1400 kg or more. Herein, the term "heavy duty tire" refers to a tire with a normal load of 1400 kg or more.

For example, the tire 1 of the present embodiment is a pneumatic tire suitable for use as a heavy duty winter tire.

For example, the tread 2 includes a tread rubber composition containing one or more rubber components including SBR, carbon black, and silica,

Any SBR may be used, including, for example, emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 10% by mass or higher, still more preferably 15% by mass or higher. The styrene content is also preferably 60% by mass or lower, more preferably 40% by mass or lower, still more preferably 300 by mass or lower. When the styrene content is within the range indicated above, the advantageous effect tends to be better achieved.

Herein, the styrene content of the SBR is determined by $^1$H-NMR.

The vinyl content of the SBR is preferably 5% by mass or higher, more preferably 10% by mass or higher, still more preferably 15% by mass or higher. The vinyl content is preferably 75% by mass or lower, more preferably 70% by mass or lower. When the vinyl content is within the range indicated above, the advantageous effect tends to be better achieved.

The vinyl content (1,2-butadiene unit content) can be measured by infrared absorption spectrometry.

The SBR may be unmodified or modified SBR.

The modified SBR may be any SBR having a functional group interactive with filler such as silica. Examples include chain end-modified SBR obtained by modifying at least one chain end of SBR with a compound (modifier) having the functional group (i.e., chain end-modified SBR terminated with the functional group); backbone-modified SBR having the functional group in the backbone; backboneand chain end-modified SBR having the functional group in both the backbone and chain end (e.g., backbone- and chain end-modified SBR in which the backbone has the functional group and at least one chain end is modified with the modifier); and chain end-modified SBR into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

SBR products manufactured or sold by Sumitomo Chemical Co., Ltd., JSR Corporation, Asahi Kasei Corporation, Zeon Corporation, etc. may be used as the SBR.

The SBR content (A, % by mass) based on 100% by mass of the rubber components in the tread rubber composition is preferably 1% by mass or more, more preferably 5% by mass or more, still more preferably 7% by mass or more, particularly preferably 10% by mass or more, but is preferably 40% by mass or less, more preferably 30% by mass or less, still more preferably 25% by mass or less, particularly preferably 20% by mass or less. When the SBR content is within the range indicated above, the formation of styrene microdomains on the tread surface can be facilitated, and the advantageous effect tends to be more suitably achieved.

The tread rubber composition may contain additional rubber components other than SBR. Examples of such additional rubber components include other diene rubbers. Examples of such other diene rubbers include isoprene-based rubbers, polybutadiene rubbers (BR), styrene-isoprene-butadiene rubbers (SIBR), ethylene-propylenediene rubbers (EPDM), chloroprene rubbers (CR), and acrylonitrile butadiene rubbers (NBR). Other examples include butyl-based rubbers and fluororubbers. To more suitably achieve the advantageous effect, isoprene-based rubbers or BR are preferred among these.

The additional rubber components may also be either unmodified or modified rubbers. Examples of the modified rubbers include those having the above-mentioned functional groups.

Examples of the isoprene-based rubbers include natural rubbers (NR), polyisoprene rubbers (IR), refined NR, modified NR, and modified IR. Examples of the NR include those commonly used in the tire industry such as SIR20, RSS#3, and TSR20. Any IR may be used, and examples include those commonly used in the tire industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

The isoprene-based rubber content based on 100% by mass of the rubber components in the tread rubber composition is preferably 10% by mass or more, more preferably 30% by mass or more, still more preferably 500 by mass or more, particularly preferably 60% by mass or more, but is preferably 90% by mass or less, more preferably 80% by mass or less, still more preferably 700 by mass or less. When the isoprene-based rubber content is within the range indicated above, the advantageous effect tends to be more suitably achieved.

Any polybutadiene rubber (BR) may be used. Examples include those commonly used in the tire industry, such as high-cis BR, BR containing 1,2-syndiotactic polybutadiene crystals (SPB-containing BR), polybutadiene rubbers synthesized using rare earth catalysts (rare earthcatalyzed BR), and polybutadiene rubbers modified by tin compounds (tin-modified BR). Usable commercial products of the BR are available from Ube Industries, Ltd., JSR Corporation, Asahi Kasei Corporation, Zeon Corporation, etc. These may be used alone or in combinations of two or more.

To obtain good properties such as ice and snow performance and abrasion resistance, the cis content of the BR is preferably 90% by mass or higher, more preferably 95% by mass or higher.

Herein, the cis content (cis-1,4-bond content) is determined by infrared absorption spectrometry or calculated from the signal intensities measured by NMR analysis.

The BR content based on 100% by mass of the rubber components in the tread rubber composition is preferably 5% by mass or more, more preferably 10% by mass or more, still more preferably 15% by mass or more, particularly preferably 20% by mass or more, but is preferably 60% by mass or less, more preferably 40% by mass or less, still more preferably 35% by mass or less, particularly preferably 30% by mass or less. When the BR content is within the range indicated above, the advantageous effect tends to be more suitably achieved.

The total styrene content of the rubber components is preferably 2.0% by mass or higher, more preferably 3.0% by mass or higher, still more preferably 4.0% by mass or higher, particularly preferably 4.5% by mass or higher, but is preferably 15.0% by mass or lower, more preferably 10.0% by mass or lower, still more preferably 8.0% by mass or lower, particularly preferably 6.0% by mass or lower. When the total styrene content is within the range indicated above, the formation of styrene microdomains on the tread surface can be facilitated, and the advantageous effect tends to be more suitably achieved.

Here, the total styrene content of the rubber components refers to the total amount (unit: % by mass) of the styrene moieties in the total rubber components, and may be calculated by the equation: $\Sigma$ [(Amount of each rubber component) $\times$ (Styrene content of the each rubber component)/100]. For example, when 100% by mass of rubber components consist of 85% by mass of a SBR having a styrene content of 40% by mass, 5% by mass of a SBR having a styrene content of 25% by mass, and 10% by mass of a BR having a styrene content of 0% by mass, the total styrene content of the rubber components is 35.25% by mass (= 85 × 40/100 + 5 × 25/100 + 10 × 0/100).

The styrene content of each rubber component can be measured by nuclear magnetic resonance (NMR).

Moreover, although the total styrene content of the rubber components is calculated according to the above-mentioned equation in Examples herein, it may be determined by analyzing the tire using, for example, a pyrolysis gas chromatography/mass spectrometry (Py-GC/MS) system.

The tread rubber composition contains carbon black.

Any carbon black may be used, and examples include furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; and graphite. These may be used alone or in combinations of two or more.

The average particle size of the carbon black is preferably 25 nm or less, more preferably 23 nm or less, still more preferably 20 nm or less. The lower limit is not limited but is preferably 15 nm or more.

The average particle size of the carbon black may be determined from a sample cut out of the tread portion of the tire using, for example, TEM.

The cetyltrimethylammonium bromide adsorption specific surface area (CTAB) of the carbon black is preferably 130 $m^2$/g or more, more preferably 140 $m^2$/g or more, still more preferably 145 $m^2$/g or more, particularly preferably 150 $m^2$/g or more. The upper limit is not limited but is preferably 250 $m^2$/g or less, more preferably 200 $m^2$/g or less, still more preferably 180 $m^2$/g or less. When the CTAB is within the range indicated above, the advantageous effect tends to be more suitably achieved.

Herein, the CTAB of the carbon black is measured in accordance with JIS K6217-3:2001.

The nitrogen adsorption specific surface area ($N_2$SA) of the carbon black is preferably 110 $m^2$/g or more, more preferably 130 $m^2$/g or more, still more preferably 140 $m^2$/g or more, particularly preferably 145 $m^2$/g or more. The upper limit is not limited but is preferably 250 $m^2$/g or less, more preferably 200 $m^2$/g or less, still more preferably 180 $m^2$/g or less. When the $N_2$SA is within the range indicated above, the advantageous effect tends to be more suitably achieved.

The $N_2$SA of the carbon black is determined in accordance with JIS K6217-2:2001.

The iodine adsorption number (IA, mg/g) of the carbon black is preferably 115 mg/g or more, more preferably 125 mg/g or more, still more preferably 130 mg/g or more, particularly preferably 140 mg/g or more. The upper limit is not limited but is preferably 200 mg/g or less, more preferably 180 mg/g or less, still more preferably 160 mg/g or less. When the IA is within the range indicated above, the advantageous effect tends to be more suitably achieved.

Herein, the IA of the carbon black is measured in accordance with JIS K6217-1:2001.

The ratio (CTAB/IA) of the cetyltrimethylammonium bromide adsorption specific surface area (CTAB) to the iodine adsorption number (IA, mg/g) of the carbon black is preferably 0.85 $m^2$/mg or higher, more preferably 1.10 $m^2$/mg or higher, still more preferably 1.13 $m^2$/mg or higher. The upper limit is not limited but is preferably 1.35 $m^2$/mg or lower, more preferably 1.30 $m^2$/mg or lower, still more preferably 1.25 $m^2$/mg or lower. When the ratio is within the range indicated above, the advantageous effect tends to be more suitably achieved.

The dibutyl phthalate absorption (DBP) of the carbon black is preferably 100 $cm^3$/100 g or more, more preferably 110 $cm^3$/100 g or more, still more preferably 115 $cm^3$/100 g or more. The upper limit is not limited but is preferably 180 $cm^3$/100 g or less, more preferably 170 $cm^3$/100 g or less, still more preferably 160 $cm^3$/100 g or less. When the DBP is within the range indicated above, the advantageous effect tends to be more suitably achieved.

The DBP of the carbon black is measured in accordance with JIS K6217-4:2001.

To more suitably achieve the advantageous effect, it is particularly preferred to use a specific carbon black having a CTAB of 140 $m^2$/g or more and a CTAB/IA of 1.10 $m^2$/mg or higher among the above-mentioned carbon black properties.

The reason why such an advantageous effect is achieved when the specific carbon black is used is not clear but is believed to be as follows.

By using the specific carbon black in the heavy duty tire, it is possible to strongly reinforce the SBR phase, thereby permitting significantly greater force to occur within the SBR phase. Thus, it is believed that the inner portion not contacting the ground greatly deforms to generate more reaction force, and therefore that the tread can instantly transmit great reaction force even on icy roads, and the response on ice can be improved.

The carbon black content per 100 parts by mass of the rubber components in the tread rubber composition is preferably 5 parts by mass or more, more preferably 20 parts by mass or more, still more preferably 30 parts by mass or more, particularly preferably 35 parts by mass or more. The carbon black content is preferably 100 parts by mass or less, more preferably 80 parts by mass or less, still more preferably 60 parts by mass or less, particularly preferably 40 parts by mass or less. When the carbon black content is within the range indicated above, the advantageous effect tends to be more suitably achieved.

The tread rubber composition contains silica.

Examples of the silica include dry silica (anhydrous silica) and wet silica (hydrous silica). These may be used alone or in combinations of two or more. Wet silica is preferred among these because it has a large number of silanol groups.

The nitrogen adsorption specific surface area ($N_2SA$) of the silica is preferably 40 $m^2/g$ or more, more preferably 100 $m^2/g$ or more, still more preferably 130 $m^2/g$ or more, particularly preferably 150 $m^2/g$ or more. The $N_2SA$ of the silica is also preferably 250 $m^2/g$ or less, more preferably 220 $m^2/g$ or less, still more preferably 200 $m^2/g$ or less. When the $N_2SA$ is within the range indicated above, the advantageous effect tends to be more suitably achieved.

The $N_2SA$ of the silica is measured by a BET method in accordance with ASTM D3037-93.

The silica content per 100 parts by mass of the rubber components in the tread rubber composition is preferably 5 parts by mass or more, more preferably 10 parts by mass or more, still more preferably 15 parts by mass or more. The silica content is preferably 45 parts by mass or less, more preferably 30 parts by mass or less, still more preferably 25 parts by mass or less, particularly preferably 20 parts by mass or less. When the silica content is within the range indicated above, the advantageous effect tends to be more suitably achieved.

The silica used may be commercially available from Degussa, Rhodia, Tosoh silica Corporation, Solvay Japan, Tokuyama Corporation, etc.

The tread rubber composition preferably contains a silane coupling agent together with the silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. To better achieve the advantageous effect, sulfide or mercapto silane coupling agents are preferred among these.

The silane coupling agent used may be commercially available from Degussa, Momentive, Shin-Etsu Silicone, Tokyo Chemical Industry Co., Ltd., AZmax. Co., Dow Corning Toray Co., Ltd., etc.

The silane coupling agent content per 100 parts by mass of the silica in the tread rubber composition is preferably 3 parts by mass or more, more preferably 5 parts by mass or more. The silane coupling agent content is also preferably 25 parts by mass or less, more preferably 20 parts by mass or less, still more preferably 15 parts by mass or less. When the silane coupling agent content is within the range indicated above, the advantageous effect tends to be more suitably achieved.

The tread rubber composition may contain additional fillers other than silica and carbon black. Examples of such additional fillers include materials known in the rubber industry, including inorganic fillers such as calcium carbonate, talc, alumina, clay, aluminum hydroxide, aluminum oxide, and mica, and poorly dispersible fillers.

The total filler (including carbon black and silica) content per 100 parts by mass of the rubber components in the tread rubber composition is preferably 30 parts by mass or more, more preferably 40 parts by mass or more, still more preferably 50 parts by mass or more, particularly preferably 55 parts by mass or more, but is preferably 110 parts by mass or less, more preferably 100 parts by mass or less, still more preferably 90 parts by mass or less. When the total filler content is within the range indicated above, the advantageous effect tends to be more suitably achieved.

The tread rubber composition preferably contains a plasticizer. The term "plasticizer" refers to a material which can impart plasticity to rubber components, and examples include liquid plasticizers (plasticizers that are liquid at room temperature (25°C)) and resins (resins that are solid at room temperature (25°C)). Among these, the tread rubber composition preferably contains any of the resins.

When the tread rubber composition contains a plasticizer, the plasticizer content (total plasticizer content) per 100 parts by mass of the rubber components is preferably 3 parts by mass or more, more preferably 5 parts by mass or more, still more preferably 7 parts by mass or more, particularly preferably 10 parts by mass or more. The upper limit is preferably 40 parts by mass or less, more preferably 30 parts by mass or less, still more preferably 20 parts by mass or less. When the plasticizer content is within the range indicated above, the advantageous effect tends to be better achieved.

Any liquid plasticizer (plasticizer that is liquid at room temperature (25°C)) may be used in the tread rubber composition. Examples include oils and liquid polymers (e.g., liquid resins, liquid diene polymers, liquid farnesene polymers). These may be used alone or in combinations of two or more.

The tread rubber composition may or may not contain a liquid plasticizer. The liquid plasticizer content per 100 parts by mass of the rubber components is preferably 20 parts by mass or less, more preferably 10 parts by mass or less, still more preferably 5 parts by mass or less, particularly preferably 0 parts by mass. When the liquid plasticizer content is within the range indicated above, the advantageous effect tends to be better achieved. The liquid plasticizer content includes the amount of the oils contained in the oil extended rubbers, if used.

Examples of the oils include process oils, plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group, etc. Process oils such as paraffinic process oils, aromatic process oils, and naphthenic process oils, and plant oils are preferred among these.

Examples of the liquid resins include terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of the foregoing resins may also be used.

Examples of the liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. The chain end or backbone of these polymers may be modified with a polar group. Hydrogenated products of these polymers may also be used.

Examples of the resins (resins that are solid at room temperature (25°C)) which may be used in the tread rubber composition include aromatic vinyl polymers, coumarone-indene resins, coumarone resins, indene resins, phenol resins, rosin resins, petroleum resins, terpene resins, and acrylic resins, all of which are solid at room temperature (25°C). The resins may be hydrogenated. These may be used alone or in combinations of two or more. To better achieve the advantageous effect, aromatic vinyl polymers, petroleum resins, and terpene resins are preferred among these, with terpene resins being more preferred.

The reason why such an advantageous effect is achieved when the resins such as terpene resins are used is not clear but is believed to be as follows.

By incorporating the resins such as terpene resins in the heavy duty tire, it is possible to enhance the tan $\delta$ at low temperatures. Accordingly, it is considered that the deformation caused by being caught by the styrene domains on the tread surface results in more grip on the surface, while the difference ($\delta$) between input and response inside the rubber is reduced, thereby facilitating transmission of force. Thus, it is believed that the inner portion not contacting the ground greatly deforms to generate more reaction force, and therefore that the tread can instantly transmit great reaction force on icy roads, and the response on ice can be improved.

When the tread rubber composition contains such a resin, the resin content per 100 parts by mass of the rubber components is preferably 3 parts by mass or more, more preferably 5 parts by mass or more, still more preferably 7 parts by mass or more, particularly preferably 10 parts by mass or more. The upper limit is preferably 40 parts by mass or less, more preferably 30 parts by mass or less, still more preferably 20 parts by mass or less. When the resin content is within the range indicated above, the advantageous effect tends to be better achieved. The terpene resin content is also suitably within the range as indicated above.

The softening point of the resin is preferably 50°C or higher, more preferably 55°C or higher, still more preferably 60°C or higher. The upper limit is preferably 160°C or lower, more preferably 150°C or lower, still more preferably 145°C or lower. When the softening point is within the range indicated above, the advantageous effect tends to be better achieved. The softening point of the resin is determined in accordance with JIS K 6220-1:2001 using a ring and ball softening point measuring apparatus and defined as the temperature at which the ball drops down.

The term "aromatic vinyl polymer" refers to a polymer that contains an aromatic vinyl monomer as a structural unit. Examples include resins produced by polymerization of $\alpha$-methylstyrene and/or styrene, more specifically styrene homopolymers (styrene resins), $\alpha$-methylstyrene homopolymers ($\alpha$-methylstyrene resins), copolymers of $\alpha$-methylstyrene and styrene, and copolymers of styrene and other monomers.

The term "coumarone-indene resin" refers to a resin that contains coumarone and indene as the main monomer components forming the skeleton (backbone) of the resin. Examples of monomer components which may be contained in the skeleton in addition to coumarone and indene include styrene, $\alpha$-methylstyrene, methylindene, and vinyltoluene.

The term "coumarone resin" refers to a resin that contains coumarone as the main monomer component forming the skeleton (backbone) of the resin.

The term "indene resin" refers to a resin that contains indene as the main monomer component forming the skeleton (backbone) of the resin.

Examples of the phenol resins include known phenol resins such as polymers produced by reaction of phenol with aldehydes such as formaldehyde, acetaldehyde, or furfural using acid or alkali catalysts. Those produced by reaction using acid catalysts (e.g., novolac-type phenol resins) are preferred among these.

Examples of the rosin resins include rosin-based resins as typified by natural rosins, polymerized rosins, modified rosins, esterified compounds thereof, and hydrogenated products thereof.

Examples of the petroleum resins include C5 resins, C9 resins, C5/C9 resins, and dicyclopentadiene (DCPD) resins, and hydrogenated products thereof. DCPD resins or hydrogenated DCPD resins are preferred among these.

The term "terpene resin" refers to a polymer that contains terpene as a structural unit. Examples include polyterpene resins produced by polymerization of terpene compounds, and aromatic modified terpene resins produced by polymerization of terpene compounds and aromatic compounds. Examples of the aromatic modified terpene resins include terpene phenol resins made from terpene compounds and phenolic compounds, terpene styrene resins made from terpene compounds and styrene compounds, and terpene phenol styrene resins made from terpene compounds, phenolic compounds, and styrene compounds. Examples of the terpene compounds include $\alpha$-pinene and $\beta$-pinene. Examples of the phenolic compounds include phenol and bisphenol A. Examples of the aromatic compounds include styrene compounds such as styrene and $\alpha$-methylstyrene.

The term "acrylic resin" refers to a polymer that contains an acrylic monomer as a structural unit.

Examples include styrene acrylic resins such as styrene acrylic resins containing carboxyl groups which are produced by copolymerization of aromatic vinyl monomer components and acrylic monomer components. Solvent-free, carboxyl group-containing styrene acrylic resins are suitable among these.

The plasticizer used may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

To better achieve the advantageous effect, the tread rubber composition preferably contains a surface roughening agent.

Any surface roughening agent may be used. Examples include eggshell powder, short fibers, zinc oxide whiskers, husk powder, shirasu particles, ground walnut, volcanic ash, and fine iron particles. The surface roughening powder may also be rubber powder such as reclaimed rubber or vulcanized rubber powder. These may be used alone or in combinations of two or more. Eggshell powder is preferred among these. The eggshell powder can be formed by grinding eggshells, and its main component is calcium carbonate.

The reason why such an advantageous effect is achieved when the eggshell powder is used is not clear but is believed to be as follows.

In the heavy duty tire, due to the eggshell powder, the deformation caused by catching on the tread surface results in more grip on the surface. Thus, it is believed that a larger deformation occurs on the tread surface, resulting in more grip on the surface, and therefore that the tread can instantly transmit great reaction force even on icy roads, and the response on ice can be improved.

The average particle size of the surface roughening agent (preferably eggshell powder) is preferably 50 um or more, more preferably 70 $\mu$m or more, still more preferably 90 um or more. The upper limit is not limited but is preferably 250 um or less, more preferably 200 $\mu$m or less, still more preferably 150 um or less, particularly preferably 120 um or less. When the average particle size is within the range indicated above, the advantageous effect tends to be better achieved.

The average particle size of the surface roughening agent (eggshell powder) is measured using a particle size distribution analyzer.

The eggshell powder used may be commercially available from Green Techno21, Kewpie Corporation, etc.

The surface roughening agent content per 100 parts by mass of the rubber components in the tread rubber composition is preferably 0.5 parts by mass or more, more preferably 2 parts by mass or more, still more preferably 5 parts by mass or more, but is preferably 30 parts by mass or less, more preferably 20 parts by mass or less, still more preferably 10 parts by mass or less, particularly preferably 8 parts by mass or less. When the surface roughening agent content is within the range indicated above, the advantageous effect tends to be better achieved. The eggshell powder content is also suitably within the range as indicated above.

From the standpoint of properties such as crack resistance and ozone resistance, the tread rubber composition preferably contains an antioxidant.

Non-limiting examples of the antioxidant include naphthylamine antioxidants such as phenyl-$\alpha$-naphthylamine; diphenylamine antioxidants such as octylated diphenylamine and 4,4'-bis($\alpha,\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Among these, p-phenylenediamine or quinoline antioxidants are preferred, and N-(1,3-dimethylbutyl)-N'-phenyl-p-phenylenediamine or polymerized 2,2,4-trimethyl-1,2-dihydroquinoline is more preferred. Usable commercial products are available from Seiko Chemical Co., Ltd., Sumitomo Chemical Co., Ltd., Ouchi Shinko Chemical Industrial Co., Ltd., Flexsys, etc.

The antioxidant content per 100 parts by mass of the rubber components in the tread rubber composition is preferably 0.2 parts by mass or more, more preferably 0.5 parts by mass or more. The antioxidant content is preferably 7.0 parts by mass or less, more preferably 4.0 parts by mass or less.

The tread rubber composition may contain stearic acid. The stearic acid content per 100 parts by mass of the rubber components in the tread rubber composition is preferably 0.5 to 10 parts by mass, more preferably 0.5 to 5 parts by mass.

The stearic acid used may be a conventional one, e.g., available from NOF Corporation, Kao Corporation, FUJIFILM Wako Pure Chemical Corporation, or Chiba Fatty Acid Co., Ltd.

The tread rubber composition may contain zinc oxide. The zinc oxide content per 100 parts by mass of the rubber components in the rubber composition is preferably 0.5 to 10 parts by mass, more preferably 1 to 5 parts by mass.

The zinc oxide used may be a conventional one, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The tread rubber composition may contain a wax. The wax content per 100 parts by mass of the rubber components in the tread rubber composition is preferably 0.5 to 10 parts by mass, more preferably 1 to 5 parts by mass.

Any wax may be used, and examples include petroleum waxes, natural waxes, and synthetic waxes produced by purifying or chemically treating a plurality of waxes. These waxes may be used alone or in combinations of two or more.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Usable commercial products are available from Ouchi Shinko Chemical Industrial Co., Ltd., Nippon Seiro Co., Ltd., Seiko Chemical Co., Ltd., etc.

The tread rubber composition may contain sulfur.

The sulfur content per 100 parts by mass of the rubber components in the tread rubber composition is preferably 0.1 parts by mass or more, more preferably 0.5 parts by mass or more, still more preferably 0.7 parts by mass or more. The sulfur content is preferably 6.0 parts by mass or less, more preferably 4.0 parts by mass or less, still more preferably 3.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The tread rubber composition may contain a vulcanization accelerator.

The vulcanization accelerator content per 100 parts by mass of the rubber components in the tread rubber composition is usually 0.3 to 10 parts by mass, preferably 0.5 to 7 parts by mass.

Any type of vulcanization accelerator may be used, including those generally used. Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide or guanidine vulcanization accelerators are preferred among these.

The vulcanization accelerator content per 100 parts by mass of the rubber components in the tread rubber composition is preferably 0.3 to 4.0 parts by mass, more preferably 0.5 to 2.5 parts by mass, still more preferably 0.7 to 1.6 parts by mass.

As illustrated in Fig. 1, the tread portion 2 has main shoulder grooves 4 continuously extending in the tire circumferential direction on the tread edge Te side, and main crown grooves 3 continuously extending in the tire circumferential direction on the tire equator C side of each main shoulder groove 4. In the example of Fig. 1, the main shoulder grooves 4 and the main crown grooves 3 are provided in a zigzag manner such that the respective phases are aligned with each other, but the present invention is not limited to the embodiment in which they are provided in such a zigzag manner.

The term "tread edge Te" is defined as the axially outermost contact position of the tire 1 determined when a normal load is applied to the tire 1 in a normal state (where the tire is mounted on a normal rim and inflated to a normal internal pressure and under no load) to contact a plane at a camber angle of 0 degrees. The dimensions and other characteristics of tire components are determined in such a normal state, unless otherwise stated.

The term "normal rim" refers to a rim specified for each tire by the standards in a standard system including standards according to which tires are provided, and may be, for example, "standard rim" in JATMA, "design rim" in TRA, or "measuring rim" in ETRTO.

The term "normal internal pressure" refers to an air pressure specified for each tire by the standards in a standard system including standards according to which tires are provided, and may be "maximum air pressure" in JATMA, a maximum value shown in Table "TIRE LOAD LIMITS AT VARIOUS COLD INFLATION PRESSURES" in TRA, or "inflation pressure" in ETRTO.

The term "normal load" refers to a load specified for each tire by the standards in a standard system including standards according to which tires are provided, and may be "maximum load capacity" in JATMA, a maximum value shown in Table "TIRE LOAD LIMITS AT VARIOUS COLD INFLATION PRESSURES" in TRA, or "load capacity" in ETRTO.

In the example of Fig. 1, the main crown grooves 3 include a first main crown groove 3A located on one side of the tire equator C and a second main crown groove 3B located on the other side of the tire equator C. In the example of Fig. 1, the first main crown groove 3A is located on the left side of the tire equator C, while the second main crown groove 3B is located on the right side of the tire equator C.

For example, each main crown groove 3 is desirably located such that its groove center line is spaced apart from the tire equator C by a distance that is 0.08 to 0.15 times the tread width TW. For example, each main shoulder groove 4 is desirably located such that its groove center line is spaced apart from the tire equator C by a distance that is 0.25 to 0.35 times the tread width TW. However, the locations of the main grooves 3 and 4 are not limited to the above ranges. The tread width TW is defined as the distance between the tread edges Te and Te in the axis direction of the tire in the above-described normal state.

For example, the groove width W1 of the main crown grooves 3 and the groove width W2 of the main shoulder grooves 4 are each desirably 3 to 7% of the tread width TW. In the heavy duty tire of this embodiment, for example, the main crown grooves 3 and the main shoulder grooves 4 each desirably have a groove depth of 15 to 25 mm.

In the example of Fig. 1, the tread portion 2 has a plurality of land regions defined by the main grooves 3 and 4. For example, the land regions in this embodiment include a crown land region 10, middle land regions 11, and shoulder land regions 12. For example, the crown land region 10 is defined between the first main crown groove 3A and the second main crown groove 3B. For example, each middle land region 11 is defined between the main crown groove 3 and the main shoulder groove 4. For example, each shoulder land region 12 is defined between the main shoulder groove 4 and the tread edge Te.

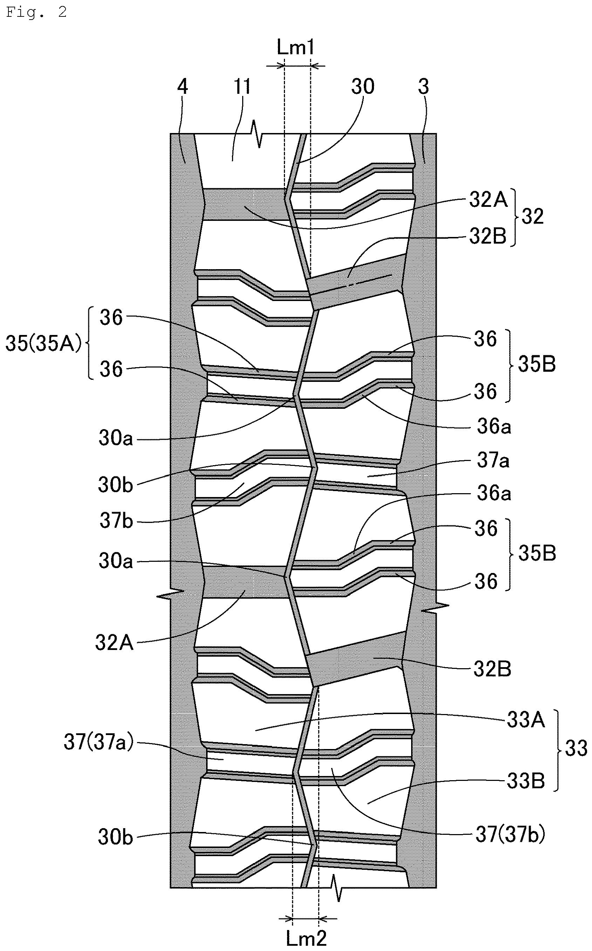

Fig. 2 illustrates an enlarged view of the middle land region 11. In Fig. 2, the grooves and sipes are lightly colored for ease of understanding the invention. In the example of Fig. 2, the middle land region 11 is defined by the main shoulder groove 4 and the main crown groove 3 which are provided in a zigzag manner such that the respective phases are aligned with each other.

The tread portion 2 has a plurality of sipes. In the example of Fig. 2, the middle land region 11 has middle longitudinal sipes 30 extending in a zigzag manner. Herein, the term "sipe" refers to a slit having a width of 1.5 mm or less as measured on the contact surface when the tire in the normal state is in contact with the ground at a normal load and a camber angle of 0 degrees.

Here, the tire 1 satisfies the following relationship (1) with respect to the SBR content A (% by mass) based on 100% by mass of the rubber components in the tread portion 2 and the ratio B ($mm^{-1}$) of the lateral direction components of the sipes to the surface area of the tread:

$$(1)\ 100 \geq A \times B \geq 40\ (\%\ \text{by mass/mm}).$$

The lower limit of the value of "A × B" is preferably 42 or more, more preferably 50 or more, still more preferably 55 or more, particularly preferably 58 or more. The upper limit is 100, preferably less, more preferably 80 or less, still more preferably 70 or less. When the value is within the range indicated above, the advantageous effect tends to be better achieved.

The tire 1 preferably satisfies the following relationship with respect to the ratio B ($mm^{-1}$) of the lateral direction components of the sipes to the surface area of the tread:

$$B \geq 3.5\ mm^{-1}.$$

The lower limit of the ratio B is preferably 4.2 $mm^{-1}$ or higher, more preferably 5.0 $mm^{-1}$ or higher, still more preferably 5.5 mm$^{-1}$ or higher, particularly preferably 5.8 mm$^{-1}$ or higher. The upper limit is not limited but is preferably 10.0 mm$^{-1}$ or lower, more preferably 8.0 mm$^{-1}$ or lower, still more preferably 7.0 mm$^{-1}$ or lower. When the ratio is within the range indicated above, the advantageous effect tends to be better achieved.

Herein, the ratio B (mm$^{-1}$) of the lateral direction components of the sipes to the surface area of the tread is calculated as described below.

<Ratio (B) of lateral direction components of sipes>

The linear length of each sipe in the tread portion in the lateral direction (tire axial direction) is determined. Here, when the sipe is inclined with respect to the tire circumferential direction or the tire axial direction, the linear length of the sipe in the lateral direction is determined as merely the linear length in the tire axial direction, and is different from the length of the sipe itself. Then, the linear lengths of the sipes in the tread portion in the lateral direction are determined and summed to obtain the total length (mm) of the sipes in the lateral direction.

Separately, the surface area (mm$^2$) of the tread is calculated using the following equation:

$$\text{Surface area of tread} = \text{Outer diameter (Dt) of tire} \times$$
$$\text{Cross sectional width (Wt) of tire} \times \pi$$

wherein the Outer diameter (Dt) of tire represents the outer diameter of the tire under no load in the normal state mounted on a normal rim with an internal pressure of 250 kPa; and the Cross sectional width (Wt) of tire represents the width of the tire under no load in the normal state mounted on a normal rim with an internal pressure of 250 kPa, as determined by excluding the patterns, letters, and the like on the sides of the tire from the linear distance between the sidewalls (the total width of the tire) including all the patterns, letters, and the like on the sides of the tire.

Then, the ratio B (mm$^{-1}$) of the lateral direction components of the sipes to the surface area of the tread is calculated from the total length (mm) of the sipes in the lateral direction and the surface area (mm$^2$) of the tread using the following equation:

$$\text{B (mm}^{-1}) = \text{Total length (mm) of sipes in lateral}$$
$$\text{direction/Surface area (mm}^2) \text{ of tread.}$$

In the example of Fig. 2, the middle land region 11 has middle longitudinal sipes 30 extending in a zigzag manner. When the middle longitudinal sipes 30 fall within the definition of "sipe", the lengths (linear lengths) of the middle longitudinal sipes 30 in the lateral direction in the example of Fig. 2 are expressed as Lm1, Lm2, etc., and the total length of the middle longitudinal sipes 30 in the lateral direction is calculated as Lm1 + Lm2 + ... (mm) .

In the example of Fig. 2, each middle longitudinal sipe 30 has a first apex 30a which is convex toward the main shoulder groove 4 and a second apex 30b which is convex toward the main crown groove 3, and they are alternately arranged in the tire circumferential direction.

For example, each middle longitudinal sipe 30 desirably has a depth of 0.55 to 0.65 times the depth of the main shoulder groove 4.

In the example of Fig. 2, the middle longitudinal sipes 30 extend in a zigzag manner in the tire circumferential direction such that they are opposite to the phases of the main shoulder groove 4 and the main crown groove 3. The phrase "extend in a zigzag manner such that they are opposite to the phases" means an embodiment in which the peak portions of the main grooves extending in a zigzag manner are aligned in the tire circumferential direction with the valley portions of the sipes extending in a zigzag manner.

In the example of Fig. 2, the middle land region 11 has a plurality of middle lug grooves 32 extending from the main shoulder groove 4 or the main crown groove 3. For example, the middle lug grooves 32 include a plurality of first middle lug grooves 32A and a plurality of second middle lug grooves 32B. In this embodiment, the first middle lug grooves 32A and the second middle lug grooves 32B are offset from each other in the tire circumferential direction.

In the example of Fig. 2, for example, the first middle lug grooves 32A extend from the main shoulder groove 4 toward the main crown groove 3 and terminate within the middle land region 11. For example, the second middle lug grooves 32B extend from the main crown groove 3 toward the main shoulder groove 4 and terminate within the middle land region 11. In this embodiment, the middle longitudinal sipes 30 extend from the first middle lug groove 32A to the second middle lug groove 32B.

For example, the middle lug grooves 32 linearly extend with a constant groove width. For example, each middle lug groove 32 desirably has a width of 0.7 to 0.8 times the width of the main shoulder groove 4. For example, each middle lug groove 32 desirably has a depth of 0.70 to 0.80 times the depth of the main shoulder groove 4.

In the example of Fig. 2, the middle land region 11 includes middle blocks 33 defined by the middle longitudinal sipes 30 and the middle lug grooves 32. For example, the middle blocks 33 include a first middle block 33A and a second middle block 33B. For example, the first middle block 33A is defined by the middle longitudinal sipes 30 and the first middle lug grooves 32A. The second middle block 33B is defined by the middle longitudinal sipes 30 and the second middle lug grooves 32B.

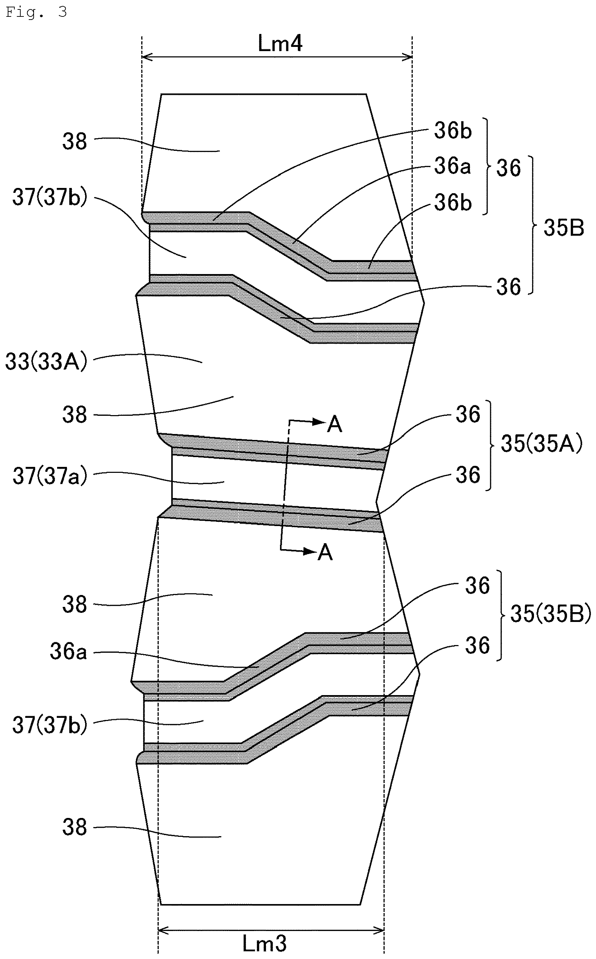

Fig. 3 shows an enlarged view of the first middle block 33A to illustrate the structure of the middle block 33.

For example, the middle block 33 desirably has a plurality of middle lateral fine groove pairs 35. Each middle lateral fine groove pair 35 consists of two middle lateral fine grooves 36 completely crossing the entire width of the block. In this embodiment, one middle block 33 has three middle lateral fine groove pairs 35. Thus, the middle block 33 is alternately divided in the tire circumferential direction into small block pieces 37 and large block pieces 38.

Each small block piece 37 is defined between two middle lateral fine grooves 36. Each large block piece 38 is defined between the middle lug groove 32 and the middle lateral fine groove pair 35 or between the middle lateral fine groove pairs 35 adjacent in the tire circumferential direction. The large block pieces 38 have a larger width in the tire circumferential direction than the small block pieces 37.

In the example of Fig. 2, in a desirable embodiment, the small block pieces 37 include a first small block piece 37a located at the circumferentially (with respect to the tire) central portion of the first middle block 33A or the second middle block 33B, and a second small block piece 37b longer in the tire axial direction than a first small block piece 37a. The first small block piece 37a formed in the first middle block 33A is desirably adjacent to the second small block piece 37b formed in the second middle block 33B via the middle longitudinal sipe 30. Similarly, the first small block piece 37a formed in the second middle block 33B is desirably adjacent to the second small block piece 37b formed in the first middle block 33A via the middle longitudinal sipe 30.

For example, each middle lateral fine groove pair 35 consists of two middle lateral fine grooves 36 extending in the same direction. In a more desirable embodiment, each pair consists of two middle lateral fine grooves 36 extending in parallel with each other.

In the example of Fig. 3, for example, the middle lateral fine groove pairs 35 include a first middle lateral fine groove pair 35A consisting of two middle lateral fine grooves 36 linearly extending in parallel with each other, and a second middle lateral fine groove pair 35B consisting of two middle lateral fine grooves 36 bending while remaining parallel with each other.

In this embodiment, for example, each middle lateral fine groove 36 of the second middle lateral fine groove pair 35B has a first portion 36a extending obliquely with respect to the tire axial direction and a second portion 36b bendingly connected to either side of the first portion 36a. For example, the second portion 36b is provided at a smaller angle with respect to the tire axial direction than the first portion 36a. Thus, each middle lateral fine groove 36 of the second middle lateral fine groove pair 35B is bent in a substantially S-shape.

At least one of the middle lateral fine groove pairs 35 is desirably communicated with the circumferentially (with respect to the tire) opposite sides of the first apex 30a or the second apex 30b of the middle longitudinal sipe 30. More specifically, one of the middle lateral fine grooves 36 of one middle lateral fine groove pair 35 is communicated with one circumferentially opposite side of the apex of the first apex 30a or the second apex 30b, and the other middle lateral fine groove 36 of the one middle lateral fine groove pair 35 is communicated with the other circumferentially opposite side of the apex.

Desirably, at least one of the middle lateral fine grooves 36 located in the first middle block 33A is smoothly continuous with the middle lateral fine groove 36 located in the second middle block 33B via the middle longitudinal sipe 30.

In this embodiment, at least a half of the plurality of middle lateral fine grooves 36 located in one first middle block 33A are smoothly continuous with the middle lateral fine grooves 36 located in the second middle block 33B. Desirably, at least one of the middle lateral fine grooves 36 is communicated with the middle lug groove 32.

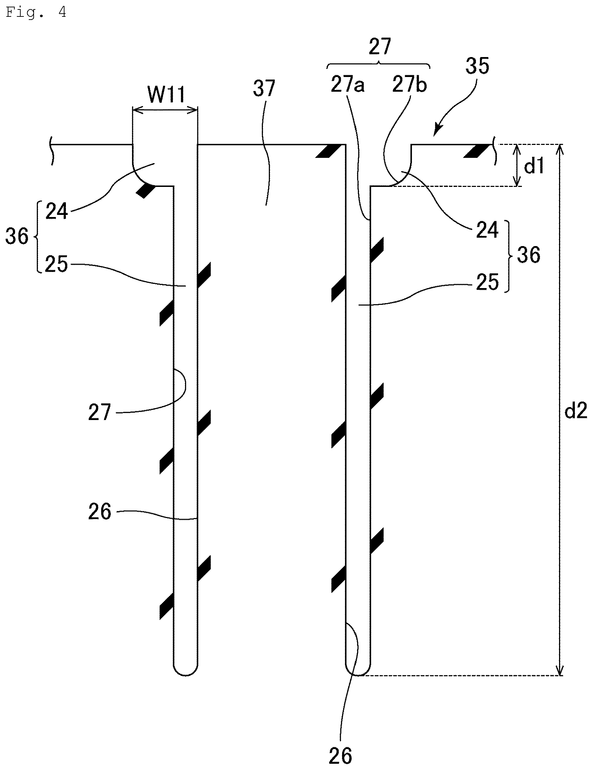

For example, the middle lateral fine grooves 36 are formed with an opening width of 3 mm or less, preferably 2.5 mm or less. As shown in the A-A cross-sectional view of the middle lateral fine groove pair 35 in Fig. 4, the middle lateral fine grooves 36 have an outer portion 24 and an inner portion 25. When the middle lateral fine grooves 36 have a width of 1.5 mm or less as measured at a position that is 400 of the groove depth from the tread surface (at which the depth from the tread surface is 400 based on 100% of the depth of the entire groove), they fall within the definition of "sipe" and are formed as sipes.

In the example of Fig. 3, the first middle block 33A includes a first middle lateral fine groove pair 35A consisting of two middle lateral fine grooves 36 linearly extending in parallel with each other and a second middle lateral fine groove pair 35B consisting of two middle lateral fine grooves 36 bending while remaining parallel with each other. When the middle lateral fine grooves 36 fall within the definition of "sipe", the lengths (linear lengths) of the middle lateral fine grooves 36 in the lateral direction in the example of Fig. 3 are expressed as Lm3, Lm4, etc., and the total length of the middle lateral fine grooves 36 in the lateral direction is calculated as Lm3 + Lm4 + ... (mm) .

Fig. 4 illustrates an A-A cross-sectional view of the middle lateral fine groove pair 35. As shown in Fig. 4, the middle lateral fine grooves 36, when viewed in cross-section, include the outer portion 24 on the tread surface side and the inner portion 25 located radially (with respect to the tire) inward of the outer portion 24.

For example, the outer portion 24 has an opening width W11 of 1.5 to 2.5 mm. For example, the outer portion 24 has a depth d1 of 0.5 to 1.5 mm. For example, the inner portion 25 desirably extends with a constant width of 1.5 mm or less.

For example, the middle lateral fine grooves 36 in this embodiment have a first wall surface 26 and a second wall surface 27. The first wall surface 26 linearly extends from the bottom to the tread surface when viewed in cross-section. The second wall surface 27, when viewed in cross-section, includes a first portion 27a which linearly extends in the tire radial direction to form the inner portion 25, and a second portion 27b which is connected to the radially (with respect to the tire) outer side of the first portion 27a and which bends in a groove width-increasing direction to form the outer portion 24.

In a desirable embodiment, in one middle lateral fine groove pair 35, the first wall surfaces 26 of both middle lateral fine grooves 36 are disposed on the sides of the small block piece 37 between the grooves.

For example, each middle lateral fine groove 36 desirably has a depth d2 of 0.55 to 0.65 times the depth of the main shoulder groove 4. In a more desirable embodiment, the middle lateral fine grooves 36 have the same depth as the middle longitudinal sipes 30.

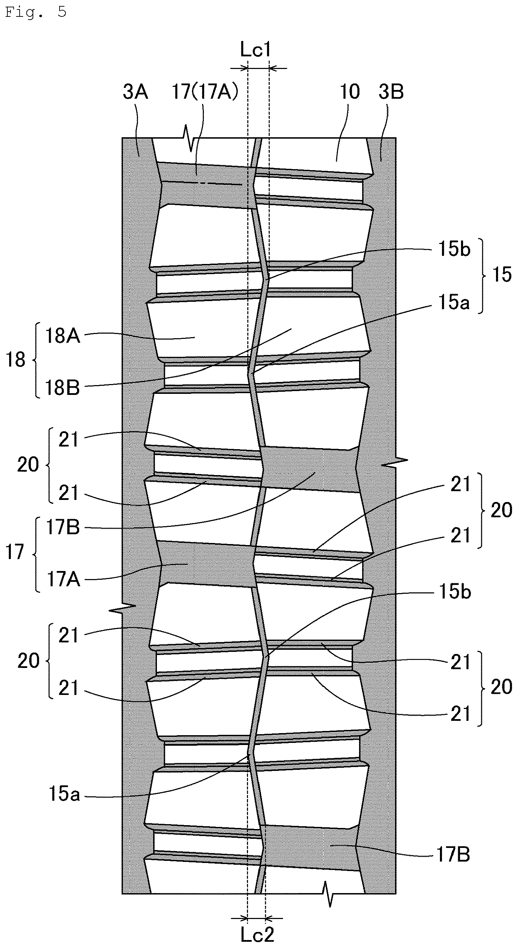

Fig. 5 illustrates an enlarged view of the crown land region 10. In Fig. 5, the grooves and sipes are lightly colored for ease of understanding the invention.

In the example of Fig. 5, the crown land region 10 has crown longitudinal sipes 15 extending in a zigzag manner. When the crown longitudinal sipes 15 fall within the definition of "sipe", the lengths (linear lengths) of the crown longitudinal sipes 15 in the lateral direction in the example of Fig. 5 are expressed as Lc1, Lc2, etc., and the total length of the crown longitudinal sipes 15 in the lateral direction is calculated as Lc1 + Lc2 + ... (mm).

In the example of Fig. 5, each crown longitudinal sipe 15 has a first apex 15a which is convex toward the first main crown groove 3A, and a second apex 15b which is convex toward the second main crown groove 3B, and they are alternately arranged in the tire circumferential direction.

For example, the crown longitudinal sipes 15 desirably have a larger depth than the middle longitudinal sipes 30. Specifically, the crown longitudinal sipes 15 desirably have a depth of 1.05 to 1.10 times the depth of the middle longitudinal sipes 30.

For example, the crown longitudinal sipes 15 desirably extend in a zigzag manner in the tire circumferential direction such that they are opposite to the phases of the first main crown groove 3A and the second main crown groove 3B.

In the example of Fig. 5, for example, the crown land region 10 has a plurality of crown lug grooves 17 extending from the main crown groove 3. For example, the crown lug grooves 17 include a plurality of first crown lug grooves 17A and a plurality of second crown lug grooves 17B. For example, the first crown lug grooves 17A and the second crown lug grooves 17B are offset in the tire circumferential direction.

For example, the first crown lug grooves 17A extend from the first main crown groove 3A toward the second main crown groove 3B and terminate within the crown land region 10. For example, the second crown lug grooves 17B extend from the second main crown groove 3B toward the first main crown groove 3A and terminate within the crown land region 10. In this embodiment, the crown longitudinal sipes 15 extend from the first crown lug groove 17A to the second crown lug groove 17B.

For example, the crown lug grooves 17 linearly extend with a constant groove width. For example, the crown lug grooves 17 desirably have a larger groove width than the middle lug grooves 32 (shown in Fig. 2). For example, the crown lug grooves 17 also desirably have a larger groove depth than the middle lug grooves 32.

In the example of Fig. 5, the crown land region 10 includes crown blocks 18 defined by the crown longitudinal sipes 15 and the crown lug grooves 17. For example, the crown blocks 18 include a first crown block 18A and a second crown block 18B. For example, the first crown block 18A is defined by the crown longitudinal sipes 15 and the first crown lug grooves 17A. For example, the second crown block 18B is defined by the crown longitudinal sipes 15 and the second crown lug grooves 17B.

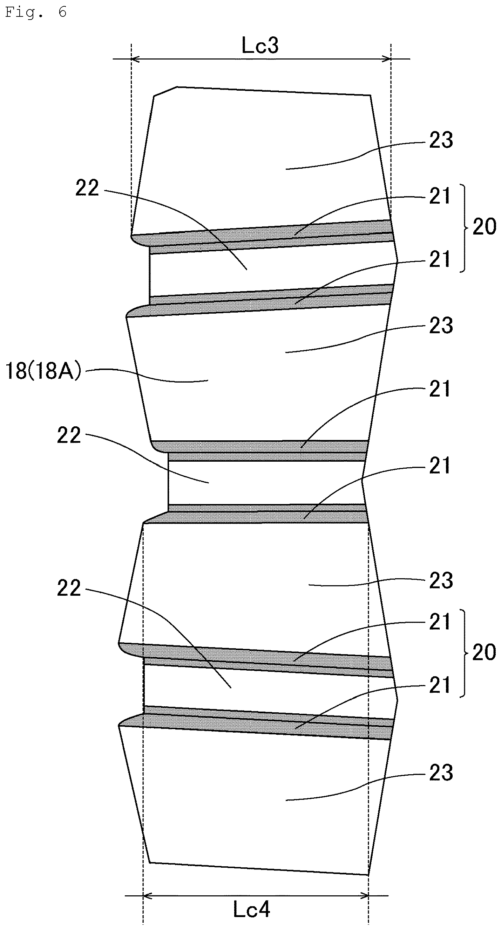

Fig. 6 shows an enlarged view of the first crown block 18A to illustrate the structure of the crown block 18. For example, the crown block 18 desirably has a plurality of crown lateral fine groove pairs 20. Each crown lateral fine groove pair 20 consists of two crown lateral fine grooves 21 completely crossing the entire width of the block. When viewed in cross-section, the crown lateral fine grooves 21 have substantially the same structure as the middle lateral fine grooves 36 (shown in Fig. 4) and the description thereof is omitted. In this embodiment, one crown block 18 has three crown lateral fine groove pairs 20. Thus, the crown block 18 is alternately divided in the tire circumferential direction into small block pieces 22 and large block pieces 23.

Each small block piece 22 is defined between two crown lateral fine grooves 21. Each large block piece 23 is defined between the crown lug groove 17 and the crown lateral fine groove pair 20 or between the crown lateral fine groove pairs 20 adjacent in the tire circumferential direction. The large block pieces 23 have a larger width in the tire circumferential direction than the small block pieces 22.

As shown in Fig. 5, at least one of the crown lateral fine groove pairs 20 is desirably communicated with the circumferentially (with respect to the tire) opposite sides of the first apex 15a or the second apex 15b of the crown longitudinal sipe 15. More specifically, one of the crown lateral fine grooves 21 of one crown lateral fine groove pair 20 is communicated with one circumferentially opposite side of the apex of the first apex 15a or the second apex 15b, and the other crown lateral fine groove 21 of the one crown lateral fine groove pair 20 is communicated with the other circumferentially opposite side of the apex.

Desirably, at least one of the crown lateral fine grooves 21 located in the first crown block 18A is smoothly continuous with the crown lateral fine groove 21 located in the second crown block 18B via the crown longitudinal sipe 15.

In this embodiment, at least a half of the plurality of crown lateral fine grooves 21 located in one first crown block 18A are smoothly continuous with the crown lateral fine grooves 21 located in the second crown block 18B. Desirably, at least one of the crown lateral fine grooves 21 is communicated with the crown lug groove 17.

In the example of Fig. 6, the first crown block 18A has a plurality of crown lateral fine grooves 21. When the crown lateral fine grooves 21 fall within the definition of "sipe", the lengths (linear lengths) of the crown lateral fine grooves 21 in the lateral direction in the example of Fig. 6 are expressed as Lc3, Lc4, etc., and the total length of the crown lateral fine grooves 21 in the lateral direction is calculated as Lc3 + Lc4 + ... (mm).

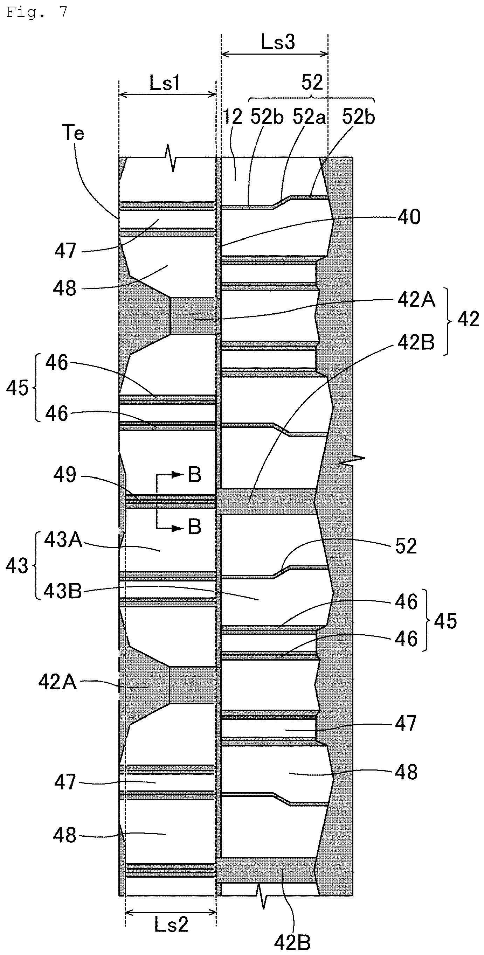

Fig. 7 illustrates an enlarged view of the shoulder land region 12. In Fig. 7, the grooves and sipes are lightly colored for ease of understanding the invention. In the example of Fig. 7, for example, the shoulder land region 12 has linearly extending shoulder longitudinal sipes 40. Herein, the length in the lateral direction of longitudinal sipes linearly extending in the tire circumferential direction is 0 (zero) mm.

In the example of Fig. 7, for example, the shoulder land region 12 has a plurality of shoulder lug grooves 42 extending from the main shoulder groove 4 or the tread edge Te. For example, the shoulder lug grooves 42 include a plurality of first shoulder lug grooves 42A and a plurality of second shoulder lug grooves 42B. For example, the first shoulder lug grooves 42A and the second shoulder lug grooves 42B are desirably offset in the tire circumferential direction.

For example, the first shoulder lug grooves 42A extend from the tread edge Te toward the main shoulder groove 4 and terminate within the shoulder land region 12. For example, the second shoulder lug grooves 42B extend from the main shoulder groove 4 toward the tread edge Te and terminate within the shoulder land region 12. In this embodiment, the shoulder longitudinal sipes 40 extend from the first shoulder lug groove 42A to the second shoulder lug groove 42B.

For example, the first shoulder lug grooves 42A desirably have a groove width gradually increasing toward the tread edge Te. For example, the first shoulder lug grooves 42A desirably have a groove depth gradually increasing toward the tread edge Te.

For example, the second shoulder lug grooves 42B desirably extend with a constant groove width. For example, the second shoulder lug grooves 42B desirably have a width of 0.75 to 0.85 times the width of the middle lug grooves 32. The second shoulder lug grooves 42B also desirably have a depth of 0.85 to 0.95 times the depth of the middle lug grooves 32.

For example, the shoulder land region 12 includes shoulder blocks 43 defined by the shoulder longitudinal sipes 40 and the shoulder lug grooves 42. For example, the shoulder blocks 43 include a first shoulder block 43A and a second shoulder block 43B. For example, the first shoulder block 43A is defined by the shoulder longitudinal sipes 40 and the first shoulder lug grooves 42A. For example, the second shoulder block 43B is defined by the shoulder longitudinal sipes 40 and the second shoulder lug grooves 42B.

In the example of Fig. 7, for example, the shoulder blocks 43 desirably have a plurality of shoulder lateral fine groove pairs 45. Each shoulder lateral fine groove pair 45 consists of two shoulder lateral fine grooves 46 completely crossing the entire width of the block. When viewed in cross-section, the shoulder lateral fine grooves 46 have substantially the same structure as the crown lateral fine grooves 21 and the description thereof is omitted.

In this embodiment, one shoulder block 43 has two shoulder lateral fine groove pairs 45. Thus, the shoulder block 43 is divided into small block pieces 47 each defined between two shoulder lateral fine grooves 46, and large block pieces 48 having a larger width in the tire circumferential direction.

In the example of Fig. 7, one shoulder block 43 has a plurality of shoulder lateral fine grooves 46. When the shoulder lateral fine grooves 46 fall within the definition of "sipe", the lengths (linear lengths) of the shoulder lateral fine grooves 46 in the lateral direction in the example of Fig. 6 are expressed as Ls1, etc., and the total length of the shoulder lateral fine grooves 46 in the lateral direction is calculated as Ls1 + ... (mm).

The first shoulder block 43A has a wide lateral fine groove 49 having a larger opening width on the tread surface than the shoulder lateral fine grooves 46 and located between two shoulder lateral fine groove pairs 45.

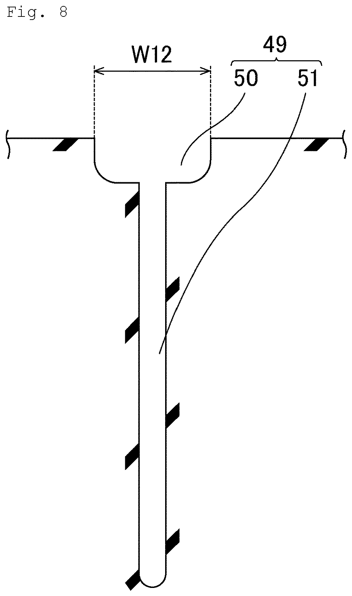

Fig. 8 illustrates a B-B cross-sectional view of the wide lateral fine groove 49. As shown in Fig. 8, for example, the wide lateral fine groove 49 includes an outer portion 50 which opens with an opening width W12 of 2.0 to 3.0 mm on the tread surface side, and an inner portion 51 located radially (with respect to the tire) inward of the outer portion 50 and extending with a constant width of 1.5 mm or less. As shown in the B-B cross-sectional view of the wide lateral fine groove 49 in Fig. 7, the wide lateral fine groove 49 includes the outer portion 50 and the inner portion 51. When the wide lateral fine groove 49 has a width of 1.5 mm or less as measured at a position that is 400 of the groove depth from the tread surface (at which the depth from the tread surface is 40% based on 100% of the depth of the entire groove), it falls within the definition of "sipe" and is formed as a sipe.

In the example of Fig. 7, each first shoulder block 43A has a wide lateral fine groove 49. When the wide lateral fine grooves 49 fall within the definition of "sipe", the lengths (linear lengths) of the wide lateral fine grooves 49 in the lateral direction in the example of Fig. 7 are expressed as Ls2, etc., and the total length of the wide lateral fine grooves 49 in the lateral direction is calculated as Ls2 + ... (mm) .

As shown in Fig. 7, for example, the second shoulder block 43B has shoulder sipes 52 completely crossing the entire width of the block and located between the second shoulder lug groove 42B and the shoulder lateral fine groove 46. For example, the shoulder sipes 52 in this embodiment include a first portion 52a extending obliquely with respect to the tire axial direction and a second portion 52b disposed at either side of the first portion 52a and extending in the tire axial direction.

In the example of Fig. 7, each second shoulder block 43B has shoulder sipes 52. When the shoulder sipes 52 fall within the definition of "sipe", the lengths (linear lengths) of the shoulder sipes 52 in the lateral direction in the example of Fig. 7 are expressed as Ls3, etc., and the total length of the shoulder sipes 52 in the lateral direction is calculated as Ls3 + ... (mm) .

In the example of the tire 1 as illustrated in Figs. 1 to 9, the total length of the sipes in the lateral direction refers to the sum of the lengths (linear lengths) in the lateral direction of those falling within the definition of "sipe", including middle longitudinal sipes 30, middle lateral fine grooves 36, crown longitudinal sipes 15, crown lateral fine grooves 21, shoulder lateral fine grooves 46, wide lateral fine grooves 49, and shoulder sipes 52, all of which correspond to the above-defined sipes.

The heavy duty tire can be produced from the above-described tread rubber composition by usual methods. Specifically, the unvulcanized rubber composition containing additives as needed may be extruded into the shape of a tire tread and then formed and assembled with other tire components in a usual manner on a tire building machine to build an unvulcanized tire, which may then be heated and pressurized in a vulcanizer to produce a tire.

The tread of the heavy duty tire at least partially includes the tread rubber composition. The entire tread may include the tread rubber composition.

The heavy duty tire is usually used as an all-steel tire using steel cords in both the carcass and the breakers.

The heavy duty tire has good ice performance and thus is suitable for use as a heavy-duty winter tire (e.g., a heavy-duty studless winter tire, a heavy-duty snow tire, a heavy-duty cold weather tire, or a heavy-duty studded tire) .

Although an embodiment of the tire of the present invention is described in detail above, the present invention is not limited to the specific embodiment and may be modified in various forms to implement the invention.

EXAMPLES

The present invention will be specifically described with reference to, but not limited to, examples.

The following describes the chemicals used in the examples and comparative examples.

NR: TSR20

SBR: SBR1502 (styrene content: 23.5% by mass) available from Sumitomo Chemical Co., Ltd.

BR: BR150B (cis content: 98% by mass) available from Ube Industries, Ltd.

Eggshell powder: eggshell powder (average particle size: 130 $\mu$m) available from Green Techno21

Carbon black: N110 ($N_2SA$: 142 m$^2$/g, DBP absorption: 116 cm$^3$/100 g, average particle size: 19 nm) available from Mitsubishi Chemical Corporation

Silica: Ultrasil VN3 ($N_2SA$: 175 m$^2$/g) available from Evonik Degussa

Silane coupling agent: Si-266 available from Evonik Degussa

Terpene resin: YS resin PX1150N ($\beta$-pinene resin, softening point: 115°C, Tg: 65°C) available from Yasuhara Chemical Co., Ltd.

Wax: Ozoace wax available from Nippon Seiro Co., Ltd.

Antioxidant: NOCRAC 6C available from Ouchi Shinko Chemical Industrial Co., Ltd.

Stearic acid: KIRI available from NOF Corporation

Zinc oxide: zinc oxide #2 available from Mitsui Mining & Smelting Co., Ltd.

Oil: Diana Process NH-70S (aromatic process oil) available from Idemitsu Kosan Co., Ltd.

5% oil-containing sulfur: HK200-5 (50 oil-containing powdered sulfur) available from Hosoi Chemical Industry Co., Ltd.

Vulcanization accelerator: NOCCELER NS (N-tert-butyl-2-benzothiazolylsulfenamide) available from Ouchi Shinko Chemical Industrial Co., Ltd.

(Examples and Comparative Examples)

The chemicals other than the sulfur and vulcanization accelerator in the formulation amounts indicated in Table 1 were kneaded at 150°C for five minutes using a 1.7 L Banbury mixer (Kobe Steel, Ltd.) to give a kneaded mixture. Then, the sulfur and vulcanization accelerator were added to the kneaded mixture, and they were kneaded at 80°C for five minutes using an open roll mill to give an unvulcanized rubber composition.

The unvulcanized rubber composition was formed into the shape of a cap tread and then assembled with other tire components to build an unvulcanized tire, followed by press vulcanization at 170°C for 10 minutes to obtain a test tire (heavy duty winter tire, size: 275/80R22.5, normal load: 3450 kg).

The test tires prepared as above were subjected to the evaluation below. Table 1 shows the results.

<Response (handling stability) on ice>

The test tires were evaluated for vehicle performance on ice. The test tires of each example were mounted on each wheel of a test car, and ten drivers drove each test car on an icy road and then subjectively evaluated the response (handling stability) on a scale of one to ten. The sum of the evaluation scores was determined and expressed as an index relative to that of the reference comparative example taken as 100. A higher index indicates better response (handling stability) on ice.

Tire size: 11R22.5
Mounted rim: 7.50 × 22.5
Tire internal pressure: 800 kPa
Test car: 10t truck (2-D car) with 5t load
Tire mounting position: all wheels

[Table 1]

| | | Example | | | | | | | | | | | | | | Comparative Example | | | | | | | | | | | | |
|---|---|---|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 | 2 | 3 | 4 | 5 | 6 | 7 | 8 | 9 | 10 | 11 | 12 | 13 |
| Formulation (parts by mass) | NR | 60 | 60 | 60 | 60 | 60 | 60 | 60 | 60 | 60 | 60 | 60 | 60 | 60 | 55 | 60 | 60 | 60 | 60 | 60 | 60 | 60 | 60 | 60 | 60 | 60 | 60 | 60 |
| | SBR | 10 | 10 | 10 | 10 | 10 | 20 | 10 | 10 | 10 | 10 | 10 | 15 | 10 | 15 | - | - | - | 10 | - | - | - | - | - | 10 | 20 | - | - |
| | BR | 30 | 30 | 30 | 30 | 30 | 20 | 30 | 30 | 30 | 30 | 30 | 25 | 30 | 30 | 40 | 40 | 40 | 30 | 40 | 40 | 40 | 40 | 40 | 30 | 20 | 40 | 40 |
| | Eggshell powder | - | - | 8 | 5 | 5 | 5 | - | 8 | - | - | - | - | - | - | - | - | - | - | 8 | 8 | 8 | 8 | 5 | 8 | 8 | 8 | 8 |
| | Carbon black | 40 | 40 | 40 | 40 | 40 | 35 | 40 | 40 | 40 | 40 | 40 | 40 | 50 | 50 | 55 | 40 | 55 | 55 | 55 | 55 | 55 | 55 | 55 | 55 | 55 | 40 | 35 |
| | Silica | 15 | 15 | 15 | 15 | 15 | 20 | 15 | 15 | 15 | 15 | 15 | 15 | 10 | 10 | - | 15 | - | - | - | - | - | - | - | - | - | 15 | 20 |
| | Silane coupling agent | 1.2 | 1.2 | 1.2 | 1.2 | 1.2 | 1.6 | 1.2 | 1.2 | 1.2 | 1.2 | 1.2 | 1.2 | 1.2 | 1.2 | - | 1.2 | - | - | - | - | - | - | - | - | - | 1.2 | 1.6 |
| | Terpene resin | - | - | - | - | - | - | 10 | 10 | - | - | - | - | - | - | - | - | - | - | - | - | - | - | - | - | - | - | - |
| | Wax | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Stearic acid | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 |
| | Zinc oxide | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 |
| | Sulfur | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Vulcanization accelerator | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | $B$ (mm$^{-1}$) | 4.2 | 5.8 | 4.2 | 4.2 | 5.8 | 4.2 | 4.2 | 4.2 | 4.8 | 5.0 | 5.3 | 4.2 | 4.2 | 4.2 | 3.1 | 3.1 | 4.2 | 3.1 | 3.1 | 4.2 | 5.8 | 3.1 | 3.1 | 3.1 | 3.1 | 3.1 | 3.1 |
| | $A \times B$ | 42 | 58 | 42 | 42 | 58 | 84 | 42 | 42 | 48 | 50 | 53 | 63 | 42 | 63 | 0 | 0 | 0 | 31 | 0 | 0 | 0 | 0 | 0 | 31 | 62 | 0 | 0 |
| | Total styrene content (% by mass) of rubber components | 2.4 | 2.4 | 2.4 | 2.4 | 2.4 | 4.7 | 2.4 | 2.4 | 2.4 | 2.4 | 2.4 | 3.5 | 2.4 | 3.5 | 0.0 | 0.0 | 0.0 | 2.4 | 0.0 | 0.0 | 0.0 | 0.0 | 0.0 | 2.4 | 4.7 | 0.0 | 0.0 |
| Evaluation | Response on ice (Handling stability) | 115 | 118 | 124 | 114 | 126 | 128 | 124 | 138 | 119 | 121 | 124 | 119 | 112 | 118 | 81 | 85 | 93 | 78 | 100 | 108 | 104 | 94 | 88 | 92 | 105 | 102 | 104 |

Table 1 shows that excellent response (handling stability) on ice was exhibited by the heavy duty tires of the examples including a tread containing one or more rubber components including SBR, carbon black, and silica in which the tread had a plurality of sipes and satisfied relationship (1).

Exemplary embodiments of the present invention include:

Embodiment 1. A heavy duty tire, including a tread,

the tread containing: one or more rubber components including a styrene-butadiene rubber; carbon black; and silica,
the tread having a plurality of sipes,
the tread satisfying the following relationship (1):

$$(1)\ \ 100 \geq A \times B \geq 40$$

wherein A represents a styrene-butadiene rubber content (% by mass) based on 100% by mass of the rubber components, and B represents a ratio (mm$^{-1}$) of lateral direction components of the sipes to a surface area of the tread.

Embodiment 2. The heavy duty tire according to Embodiment 1,
wherein the tread has a styrene-butadiene rubber content A (% by mass) of 5 to 30% by mass based on 100% by mass of the rubber components.
Embodiment 3. The heavy duty tire according to Embodiment 1 or 2,
wherein the tread has a ratio B (mm$^{-1}$) of the lateral direction components of the sipes to the surface area of the tread of 3.5 mm$^{-1}$ or higher.
Embodiment 4. The heavy duty tire according to any one of Embodiments 1 to 3,
wherein the tread contains a terpene resin.
Embodiment 5. The heavy duty tire according to any one of Embodiments 1 to 4,
wherein the tread contains eggshell powder.
Embodiment 6. The heavy duty tire according to Embodiment 5,
wherein the eggshell powder has an average particle size of 50 um or more.
Embodiment 7. The heavy duty tire according to any one of Embodiments 1 to 6,
wherein the carbon black has an average particle size of 25 nm or less.
Embodiment 8. The heavy duty tire according to any one of Embodiments 1 to 7,
wherein the tread has a carbon black content of 20 to 60 parts by mass per 100 parts by mass of the rubber components.
Embodiment 9. The heavy duty tire according to any one of Embodiments 1 to 8,
wherein the tread has a silica content of 10 to 30 parts by mass per 100 parts by mass of the rubber components.

REFERENCE SIGNS LIST

2 tread portion
3 main crown groove
4 main shoulder groove
11 middle land region
30 middle longitudinal sipe
Te tread edge

Claims

1. A heavy duty tire (1), comprising a tread (2),

the tread (2) comprising: one or more rubber components including a styrene-butadiene rubber; carbon black; and silica,
the tread (2) having a plurality of sipes (30), **characterized in that**
the tread (2) satisfying the following relationship (1) :

$$(1)\ 100 \geq A \times B \geq 40$$

wherein A represents a styrene-butadiene rubber content (% by mass) based on 100% by mass of the rubber components, and B represents a ratio (mm$^{-1}$) of lateral direction components of the sipes (30) to a surface area of the tread (2),

wherein the surface area (mm$^2$) of the tread is calculated using the following equation:

$$\text{Surface area of tread} = \text{Outer diameter (Dt) of tire} \times$$
$$\text{Cross sectional width (Wt) of tire} \times \pi,$$

wherein the Outer diameter (Dt) of tire represents the outer diameter of the tire under no load in the normal state mounted on a normal rim with an internal pressure of 250 kPa; and the Cross sectional width (Wt) of tire represents the width of the tire under no load in the normal state mounted on a normal rim with an internal pressure of 250 kPa, as determined by excluding the patterns, letters, and the like on the sides of the tire from the linear distance between the sidewalls (the total width of the tire) including all the patterns, letters, and the like on the sides of the tire.

2. The heavy duty tire (1) according to claim 1,
wherein the tread (2) has a styrene-butadiene rubber content A (% by mass) of 5 to 30% by mass based on 100% by mass of the rubber components.

3. The heavy duty tire (1) according to claim 1 or 2,
wherein the tread (2) has a ratio B (mm$^{-1}$) of the lateral direction components of the sipes (30) to the surface area of the tread (2) of 3.5 mm$^{-1}$ or higher.

4. The heavy duty tire (1) according to any one of claims 1 to 3,
wherein the tread (2) comprises a terpene resin.

5. The heavy duty tire (1) according to any one of claims 1 to 4,
wherein the tread (2) comprises eggshell powder.

6. The heavy duty tire (1) according to claim 5,
wherein the eggshell powder has an average particle size of 50 um or more.

7. The heavy duty tire (1) according to any one of claims 1 to 6,
wherein the carbon black has an average particle size of 25 nm or less.

8. The heavy duty tire (1) according to any one of claims 1 to 7,
wherein the tread (2) has a carbon black content of 20 to 60 parts by mass per 100 parts by mass of the rubber components.

9. The heavy duty tire (1) according to any one of claims 1 to 8,
wherein the tread (2) has a silica content of 10 to 30 parts by mass per 100 parts by mass of the rubber components.

**Patentansprüche**

1. Schwerlastreifen (1), der einen Laufstreifen (2) umfasst,

wobei der Laufstreifen (2) umfasst: eine oder mehrere Kautschukkomponenten, die einen Styrol-Butadien-Kautschuk enthalten; Ruß; und Siliciumdioxid,
wobei der Laufstreifen (2) eine Mehrzahl an Einschnitten (30) aufweist,

**dadurch gekennzeichnet, dass**
der Laufstreifen (2) der folgenden Beziehung (1) genügt:

$$(1)\ 100 \geq A \times B \geq 40$$

wobei A einen Styrol-Butadien-Kautschuk-Gehalt (Massen-%) bezogen auf 100 Massen-% der Kautschukkomponenten darstellt, und B ein Verhältnis (mm$^{-1}$) von Querrichtungskomponenten der Einschnitte (30) zu einer Oberfläche des Laufstreifens (2) darstellt,
wobei die Oberfläche (mm$^2$) des Laufstreifens unter Verwendung der folgenden Gleichung berechnet ist:

$$\text{Oberfläche des Laufstreifens} = \text{Außendurchmesser (Dt) des Reifens} \times$$

$$\text{Querschnittsbreite (Wt) des Reifens} \times \pi,$$

wobei der Außendurchmesser (Dt) des Reifens den Außendurchmesser des Reifes ohne Belastung im normalen Zustand, aufgezogen auf eine normale Felge, mit einem Innendruck von 250 kPa darstellt; und die Querschnittsbreite (Wt) des Reifens die Breite des Reifens ohne Belastung im normalen Zustand, aufgezogen auf eine normale Felge, mit einem Innendruck von 250 kPa darstellt, bestimmt durch Ausschließen der Muster, Buchstaben und dergleichen an den Seiten des Reifens aus dem linearen Abstand zwischen den Seitenwänden (der Gesamtbreite des Reifens), der alle Muster, Buchstaben und dergleichen an den Seiten des Reifens enthält.

2. Schwerlastreifen (1) nach Anspruch 1,
wobei der Laufstreifen (2) einen Styrol-Butadien-Kautschuk-Gehalt A (Massen-%) von 5 bis 30 Massen-% aufweist, bezogen auf 100 Massen-% der Kautschukkomponenten.

3. Schwerlastreifen (1) nach Anspruch 1 oder 2,
wobei der Laufstreifen (2) ein Verhältnis B (mm$^{-1}$) der Querrichtungskomponenten der Einschnitte (30) zu der Oberfläche des Laufstreifens (2) von 3,5 mm$^{-1}$ oder höher aufweist.

4. Schwerlastreifen (1) nach einem der Ansprüche 1 bis 3,
wobei der Laufstreifen (2) ein Terpenharz umfasst.

5. Schwerlastreifen (1) nach einem der Ansprüche 1 bis 4,
wobei der Laufstreifen (2) Eierschalenpulver umfasst.

6. Schwerlastreifen (1) nach Anspruch 5,
wobei das Eierschalenpulver eine mittlere Partikelgröße von 50 $\mu$m oder mehr aufweist.

7. Schwerlastreifen (1) nach einem der Ansprüche 1 bis 6,
wobei der Ruß eine mittlere Partikelgröße von 25 nm oder weniger aufweist.

8. Schwerlastreifen (1) nach einem der Ansprüche 1 bis 7,
wobei der Laufstreifen (2) einen Rußgehalt von 20 bis 60 Massenteilen pro 100 Massenteile der Kautschukkomponenten aufweist.

9. Schwerlastreifen (1) nach einem der Ansprüche 1 bis 8,
wobei der Laufstreifen (2) einen Siliciumdioxid-Gehalt von 10 bis 30 Massenteilen pro 100 Massenteile der Kautschukkomponenten aufweist.

**Revendications**

1. Pneumatique pour service intensif (1), comprenant une bande de roulement (2),

la bande de roulement (2) comprenant : un ou plusieurs composants de caoutchouc incluant un caoutchouc styrène butadiène ; noir de carbone ; et silice ;
la bande de roulement (2) ayant une pluralité de fentes (30),
**caractérisé en ce que**
la bande de roulement (2) satisfait la relation (1) suivante :

$$(1)\ 100 \geq A \times B \geq 40$$

où A représente une teneur en caoutchouc styrène butadiène (% en masse) sur la base de 100 % en masse des composants de caoutchouc, et B représente un rapport (mm$^{-1}$) de composants de direction latérale des fentes (30) sur une aire surfacique de la bande de roulement (2),

dans lequel l'aire surfacique (mm$^2$) de la bande de roulement est calculée à l'aide de l'équation suivante :

$$\text{aire surfacique de bande de roulement} = \text{diamètre extérieur (Dt) de pneumatique} \times \text{largeur de section transversale (Wt) de pneumatique} \times \pi,$$

dans lequel le diamètre extérieur (Dt) de pneumatique représente le diamètre extérieur du pneumatique sous aucune charge dans l'état normal monté sur une jante normale avec une pression interne de 250 kPa ; et la largeur de section transversale (Wt) de pneumatique représente la largeur du pneumatique sous aucune charge dans l'état normal monté sur une jante normale avec une pression interne de 250 kPa, telle que déterminée en excluant les motifs, lettres, et similaires, sur les côtés du pneumatique, de la distance linéaire entre les parois latérales (la largeur totale du pneumatique) incluant la totalité des motifs, lettres et similaires sur les côtés du pneumatique.

2. Pneumatique pour service intensif (1) selon la revendication 1,
dans lequel la bande de roulement (2) a une teneur A en caoutchouc styrène butadiène (% en masse) de 5 à 30 % en masse sur la base de 100 % des composants de caoutchouc.

3. Pneumatique pour service intensif (1) selon la revendication 1 ou 2,
dans lequel la bande de roulement (2) a un rapport B (mm$^{-1}$) des composants de direction latérale des fentes (30) sur l'aire surfacique de la bande de roulement (2) de 3,5 mm$^{-1}$ ou plus élevé.

4. Pneumatique pour service intensif (1) selon l'une quelconque des revendications 1 à 3,
dans lequel la bande de roulement (2) comprend une résine de terpène.

5. Pneumatique pour service intensif (1) selon l'une quelconque des revendications 1 à 4,
dans lequel la bande de roulement (2) comprend de la poudre de coquilles d'oeufs.

6. Pneumatique pour service intensif (1) selon la revendication 5,
dans lequel la poudre de coquilles d'oeufs a une taille particulaire moyenne de 50 $\mu$m ou plus.

7. Pneumatique pour service intensif (1) selon l'une quelconque des revendications 1 à 6,
dans lequel le noir de carbone a une taille particulaire moyenne de 25 nm ou moins.

8. Pneumatique pour service intensif (1) selon l'une quelconque des revendications 1 à 7,
dans lequel la bande de roulement (2) a une teneur en noir de carbone de 20 à 60 parts en masse pour 100 parts en masse des composants de caoutchouc.

9. Pneumatique pour service intensif (1) selon l'une quelconque des revendications 1 à 8,
dans lequel la bande de roulement (2) a une teneur en silice de 10 à 30 parts en masse pour 100 parts en masse des composants de caoutchouc.

Fig. 1

Fig. 2

Fig. 3

Fig. 4

Fig. 5

Fig. 6

Fig. 7

Fig. 8

**EP 4 079 537 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140251519 A1